# EUROPEAN PATENT SPECIFICATION

(11) **EP 2 706 785 B1**
(45) Date of publication and mention of the grant of the patent: **06.07.2016**
(21) Application number: 12782242.7
(22) Date of filing: 01.05.2012
(51) Int. Cl.: H04W 52/02, H04W 36/30

(54) **USER EQUIPMENT AND MOBILE COMMUNICATION METHOD**
BENUTZEREINRICHTUNG UND MOBILKOMMUNIKATIONSVERFAHREN
ÉQUIPEMENT D'UTILISATEUR ET PROCÉDÉ DE COMMUNICATION MOBILE

(30) Priority: 06.05.2011 JP 2011103846
(43) Date of publication of application: 12.03.2014
(73) Proprietor: NTT DOCOMO, INC., Chiyoda-ku Tokyo 100-6150 (JP)
(72) Inventor: NAKAMORI, Takeshi, Tokyo 100-6150 (JP); ISHII, Hiroyuki, Tokyo 100-6150 (JP)
(74) Representative: Hoffmann Eitle
(86) International application number: PCT/JP2012/061577
(87) International publication number: WO 2012/153683

(56) References cited:
- EP-A1- 2 315 469
- WO-A1-2009/153165
- WO-A1-2010/150462
- WO-A1-2010/150462
- WO-A1-2011/040516
- HUAWEI: "Consideration on deactivated SCC measurement core requirements in CA", 3GPP DRAFT; R4-103614, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Xian; 20101011, 7 October 2010 (2010-10-07), XP050455304, [retrieved on 2010-10-07]
- HUAWEI: "Measurements on deactivated CC", 3GPP DRAFT; R2-101021 MEASUREMENT ON DEACTIVATED CC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 15 February 2010 (2010-02-15), XP050421595, [retrieved on 2010-02-15]
- MIKIO IWAMURA ET AL: "Carrier aggregation framework in 3GPP LTE-advanced [WiMAX/LTE Update]", IEEE COMMUNICATIONS MAGAZINE, IEEE SERVICE CENTER, PISCATAWAY, US, vol. 48, no. 8, 1 August 2010 (2010-08-01) , pages 60-67, XP011315996, ISSN: 0163-6804
- ERICSSON: "[70#14] LTE: Removal of Activation/Deactivation from Rel-10?", 3GPP DRAFT; R2-103878 SUMMARY OF EMAIL DISCUSSION 70-14 LTE - CA REMOVAL OF ACTIVATIONDEACTIVATION FROM REL-10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628 - 20100702, 22 June 2010 (2010-06-22), XP050605236, [retrieved on 2010-06-22]
- HUAWEI: 'Measurements on deactivated CC' 3GPP TSG RAN WG2 MEETING #69 26 February 2010, XP050421595
- MEDIATEK: 'DRX Operation in Carrier Aggregation Mode for LTE-A' 3GPP TSG RAN WG2 MEETING #67, R2-094258 24 August 2009, XP008155367

## Description

### [Technical Field]

The present invention relates to a user equipment and a mobile communication method. Particularly, the present invention relates to a user equipment and a mobile communication method in a mobile communication system using the next-generation mobile communication technology.

### [Background Art]

A communication scheme, which is the next generation of a Wideband Code Division Multiplexing Access (WCDMA) scheme, a High-Speed Downlink Packet Access (HSDPA) scheme, and a High-Speed Uplink Packet Access (HSUPA) scheme, for example, that is, a Long Term Evolution (LTE) scheme has been discussed in the 3GPP, which is a group aiming to standardize the WCDMA, and the specification work is under progress.

As a radio access scheme in the LTE scheme, an Orthogonal Frequency Division Multiplexing Access (OFDMA) scheme is defined for a downlink, and a Single-Carrier Frequency Division Multiple Access (SC-FDMA) scheme is defined for an uplink (for example, refer to Non Patent Literature 1).

The OFDMA scheme denotes a multicarrier transmission scheme in which a frequency band is divided into a plurality of narrow frequency bands (sub-carriers), and data is loaded on each sub-carrier for transmission. According to the OFDMA scheme, sub-carriers are densely arranged on the frequency axis while being orthogonal to one another, so that high-rate transmission is achieved, resulting in the improvement of frequency use efficiency.

The SC-FDMA scheme is a single carrier transmission scheme in which a frequency band is divided for each user equipment UE (User Equipment) and transmission is performed using different frequency bands among a plurality of user equipments UE. According to the SC-FDMA scheme, since it can not only simply and effectively reduce interference among user equipments UE, but can also reduce a change in transmission power, the SC-FDMA scheme is preferable in terms of low power consumption of the user equipment UE, and the expansion of a coverage, for example.

In the LTE scheme, in both the downlink and the uplink, one or more resource blocks (RBs) are assigned to the user equipment UE, so that communication is performed.

A base station device eNB determines the user equipment UE, to which a resource block is to be assigned, among a plurality of user equipments UE in each subframe (1 ms in the LTE scheme) (such a process is called "scheduling").

In the downlink, the base station device eNB transmits a shared channel signal to the user equipment UE, which is selected through the scheduling, by using one or more resource blocks, and in the uplink, the user equipment UE selected through the scheduling transmits a shared channel signal to the base station device eNB by using one or more resource blocks.

In addition, the shared channel signal is a signal on PUSCH (Physical Uplink Shared Channel) in an uplink, and is a signal on PDSCH (Physical Downlink Shared Channel) in a downlink.

Furthermore, as a next-generation communication scheme of the LTE scheme, an LTE-advanced scheme is discussed in the 3GPP. Requirements of the LTE-advanced scheme have been summarized in Non Patent Literature 2.

In the LTE-advanced scheme, it is possible to perform "Carrier aggregation (CA)". Here, the "Carrier aggregation" represents that communication is simultaneously performed using a plurality of carriers.

For example, when the CA is performed in the uplink, the user equipment UE performs transmission by using different carriers for each "Component Carrier", thereby transmitting an uplink signal by using a plurality of carriers.

Furthermore, when the "Carrier aggregation" is performed in the downlink, the base station device eNB performs transmission by using different carriers for each "Component Carrier (CC)", thereby transmitting a downlink signal by using a plurality of carriers.

Meanwhile, in a mobile communication system including a plurality of cells, the user equipment UE is configured to continue communication while switching a cell when moving from one cell to another cell. The cell switching will be referred to as a "handover". In general, in the mobile communication system, when the user equipment UE moves to a neighboring cell and the radio quality of a signal from the neighboring cell is higher than the radio quality of a signal from a serving cell in the user equipment UE, the user equipment UE is configured to perform handover to the neighboring cell.

Note that the radio quality of the signal, for example, includes the received power of the signal. More specifically, the received power of the signal, for example, is the received power (RSRP: Reference Signal Received Power) of a downlink reference signal transmitted from the neighboring cell or the serving cell (refer to Non Patent Literature 3 for the definition of the RSRP).

In addition, as the radio quality of the signal, the radio quality (RSRQ: Reference Signal Received Quality) of a downlink reference signal, or SIR (RS-SIR), CQI (Channel Quality Indicator), and CSI

(Channel State Information), for example, of the downlink reference signal may be used instead of the RSRP.

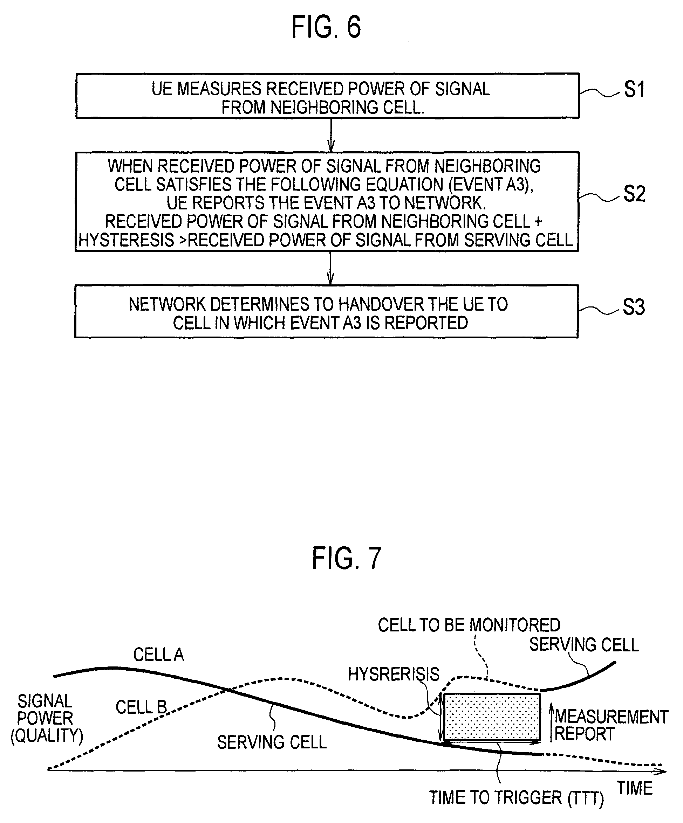

With reference to Fig. 6 and Fig. 7, an example of the handover procedure will be specifically described. In the following description, the received power of a signal (RSRP) is used as the radio quality of the signal.

As illustrated in Fig. 6, in step S1, the user equipment UE measures the received power of signals from a serving cell and a neighboring cell. Furthermore, in order to detect an undetected neighboring cell, the user equipment UE may perform cell search together with the measurement. The "cell search" and the "measurement of the radio quality (the received power) of the serving cell and the neighboring cell" in the present process may be collectively called a "Measurement process (a measurement process)".

In step S2, the user equipment UE determines whether the received power of the signal from the neighboring cell satisfies the following Equation 1.

### received power of signal from neighboring cell + hysteresis > received power of signal from serving cell ... (Equation 1)

When it was determined that Equation 1 above is satisfied, the user equipment UE notifies a network of an event A3 for reporting a result of the aforementioned measurement in step S2.

Specifically, as illustrated in Fig. 7, the user equipment UE measures the received power of a signal from a serving cell (a cell A) and a neighboring cell (a cell B) to be monitored, and determines whether to notify the result of the aforementioned measurement, by using "hysteresis [dB]" and "TTT (Time To Trigger) [ms]" notified in advance.

That is, in Fig. 7, when the received power (the radio quality) of the signal from the cell B continuously exceeds the received power (the radio quality) of the signal from the cell A by "hysteresis" and more for a predetermined period "TTT" and more, the user equipment UE determines to notify a "Measurement report (measurement report)" including the result of the aforementioned measurement.

Here, the "hysteresis" is a value provided for preventing a handover from the serving cell to the neighboring cell from frequently occurring at a cell boundary, and may have a positive value or a negative value. However, the "hysteresis" is generally set as a negative value.

Then, in step S3, when the notification of the event A3 is received, the network determines that the user equipment UE should be handed over to a cell related to the received event A3.

Note that the Equation 1 may be expressed by Equation 2 below. In the case of Equation 2, both the hysteresis and the offset are operated in a hysteresis manner.

### received power of signal from neighboring cell - hysteresis > received power of signal from serving cell + offset ... (Equation 2)

In the case of performing the "Carrier aggregation", the user equipment UE generally performs, for each "Component Carrier", the aforementioned measurement of the received power of the signal from the serving cell and the neighboring cell, and the transmission of the "Measurement report".

Meanwhile, when the "Carrier aggregation" is being performed, "P_{cell}" and "S_{cell}" are set for each "Component Carrier" in the serving cell.

Only one "P_{cell}" is set. The "Component Carrier", in which the "P_{cell}" has been set, may be called "PCC (Primary Component Carrier)".

Furthermore, when there are a plurality of "Component Carriers", the "S_{cell}" is set for each "Component Carrier". The "Component Carrier", in which the "S_{cell}" has been set, may be called "SCC (Secondary Component Carrier)".

In general, in the case of performing the "Carrier aggregation", the case, in which a plurality of "Component Carriers" are adjacent to one another (that is, the plurality of "Component Carriers" are located in the same frequency band), and the case, in which the plurality of "Component Carriers" are not adjacent to one another (that is, the plurality of "Component Carriers" are arranged in different bands), are considered.

It is general that the user equipment UE processes CA communication by adjacent "Component Carriers" through a single radio circuit while processing CA communication by non-adjacent "Component Carriers" through a plurality of radio circuits. One of the purposes of using the single radio circuit is to reduce the number of parts of a device, for example.

In addition, when the "Carrier aggregation" is being performed, the user equipment UE needs to always receive a signal from a radio base station eNB in the "P_{cell}". However, in the "S_{cell}", it is sufficient if the user equipment UE receives a signal only when a data signal is transmitted.

In this regard, in the "S_{cell}" or the "SCC", when receiving a signal or only when performing a "Measurement process", it is sufficient if the user equipment UE sets a radio circuit in a corresponding carrier, and thus it is considered that it is possible to suppress current consumption.

However, the user equipment UE needs to perform the "Measurement process" and the transmission of the "Measurement report" for each fixed period.

Furthermore, in the LTE scheme and the LTE-advanced scheme, discontinuous reception (DRX) control is applied.

The DRX control is applied when the radio base station eNB and the user equipment UE are being connected to each other and there is no data to be communicated, the user equipment UE in the DRX state is configured to periodically, that is, discontinuously receive a downlink control signal that is transmitted via Physical Downlink Control Channel (PDCCH).

The time, for which the downlink control signal transmitted via the PDCCH is received, is called "On-duration (reception duration)".

In such a case, since it is sufficient if the user equipment UE discontinuously, rather than at all the timings, receives the downlink control signal transmitted via the PDCCH, it is possible to reduce power consumption of a battery.

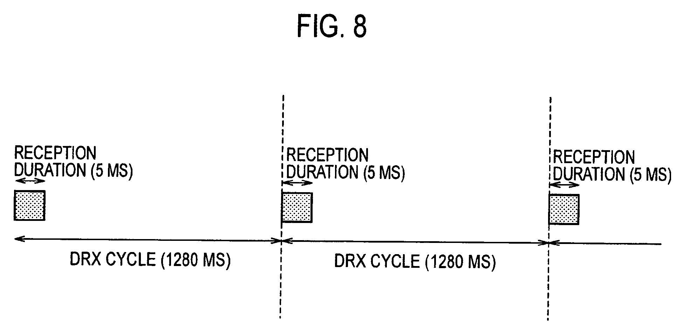

More specifically, as illustrated in Fig. 8, the user equipment UE is configured to receive the downlink control signal transmitted via the PDCCH only in a reception duration (5 ms in the example of Fig. 8) set for each DRX cycle (1280 ms in the example of Fig. 8), and to turn OFF other transceivers. As a consequence, it is possible to reduce power consumption of a battery in the user equipment UE.

In addition, in the DRX state, in order to maximize the effect that the power consumption of the battery of the user equipment UE is reduced, the frequency of the aforementioned measurement of the received power of the signal from the serving cell and the neighboring cell is reduced.

HUAWEI: "Consideration on deactivated SCC measurement core requirements in CA", 3GPP DRAFT; R4-103614, 3RD GENERATION PARTNERSHIP PROJECT (3GPP), MOBILE COMPETENCE CENTRE ;650, ROUTE DES LUCIOLES ; F-06921 SOPHIA-ANTIPOLIS CEDEX ; FRANCE, vol. RAN WG4, no. Xian; 20101011, 7 October 2010 (2010-10-07), describes how to define the measurement requirements of the deactivated SCC in case of CA, and in particular considerations on the RRM core requirements of the deactivated SCC based on the existing simulation results. When the short common DRX cycle is used, the measurement period of PCC and activated SCC can follow the intra-frequency measurement requirements in Rel-8/9. There is no motivation to define the measurement requirements of the deactivated SCC stricter than the P cell measurement activity. As a first option it is described to define a virtual DRX cycle for the deactivated SCC when short common DRX cycle is used, wherein a cycle length can be set longer than the configured common DRX cycles. The measurement period of deactivated SCC can be scaled by the virtual DRX cycles. In a second option it is described that the measurement period of deactivated SCC can be scaled by multiple N DRX cycles. The scaled number of DRX cycles to define the measurement period of deactivated SCC compared with intra-frequency measurement in Rel-8/9 can be increased.

HUAWEI: "Measurements on deactivated CC", 3GPP DRAFT; R2-101021 MEASUREMENT ON DEACTIVATED CC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 15 February 2010 (2010-02-15), XP050421595, describes measurement details on deactivated CC's and relevant impact on the measurement on CC activation/CCD activation. The user equipment is described as measuring deactivated CC at least one time during multiple DRx cycle. It is suggested to configure the measurement. The of CC 2 (3) according to the frequency of data or arrival of its own CC,

which should be the multiple of the common DRX cycle and should take the traffic model into account.

### [Citation List]

### [Non Patent Literature]

[NPL 1] 3GPP TS36.211 (V10.1.0)
[NPL 2] 3GPP TR36.913 (V10.0.0)
[NPL 3] 3GPP TS36.214 (V10.1.0)

### [Summary of Invention]

However, the above-mentioned conventional mobile communication system has the following problems.

As described above, in the LTE-Advanced scheme, when the "Carrier aggregation" is performed, since data is not always transmitted in the "S_{cell}" or the "SCC", the user equipment UE does not always need to perform the reception of a signal and a "Measurement process" in "S_{cell}" or "SCC" and a frequency bandwidth in a radio circuit is narrowed to reduce current consumption, so that the user equipment UE controls the radio circuit at a fixed interval.

However, particularly, in the case in which the aforementioned "Component Carriers" are adjacent to each other, that is, the "Component Carriers" are located in the same frequency band, since the user equipment UE performs the reception of the signal and the "Measurement process" through a single radio circuit, there is a case where a problem occurs in which a short break occurs at the time of control switching of the radio circuit and thus the accuracy of the reception of the signal and the "Measurement process" in the "P_{cell}" or the "PCC" may deteriorate.

Therefore, the present invention has been achieved in view of the above-described problems, and an object thereof is to provide a user equipment and a mobile communication method, by which it is possible to appropriately measure downlink radio quality when multicarrier transmission is performed.

According to the present invention there is provided a user equipment according to claim 1, a user equipment according to claim 2 and a mobile communication method according to claim 6.

Embodiments of the invention are defined in the dependent claims 3 to 5.

### [Brief Description of Drawings]

[Fig. 1] Fig. 1 is a diagram illustrating the entire configuration of a mobile communication system according to a first embodiment of the present invention.
[Fig. 2] Fig. 2 is a diagram illustrating the entire configuration of the mobile communication system according to the first embodiment of the present invention.
[Fig. 3] Fig. 3 is a functional block diagram of a radio base station according to the first embodiment of the present invention.
[Fig. 4] Fig. 4 is a functional block diagram of a user equipment according to the first embodiment of the present invention.
[Fig. 5] Fig. 5 is a diagram for explaining a measurement process in the user equipment according to the first embodiment of the present invention.
[Fig. 6] Fig. 6 is a flowchart for explaining an operation of a conventional mobile communication system.
[Fig. 7] Fig. 7 is a diagram for explaining a handover procedure in a conventional mobile communication system.
[Fig. 8] Fig. 8 is a diagram for explaining DRX control in a conventional mobile communication system.

### [Description of Embodiments]

### (Mobile communication system according to first embodiment of the present invention)

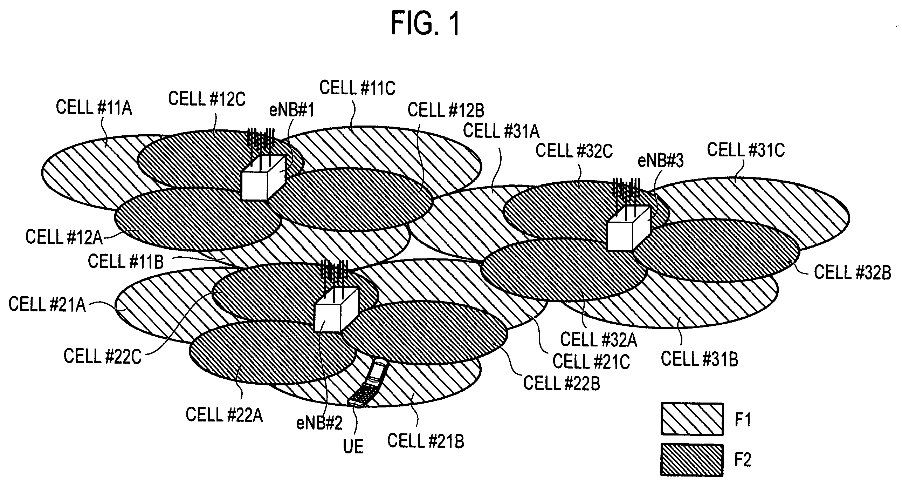

A mobile communication system according to a first embodiment of the present invention is described with reference to Fig. 1 through Fig. 5.

The mobile communication system according to the present embodiment is an LTE-Advanced mobile communication system, and includes a radio base station eNB#1, a radio base station eNB#2, and a radio base station eNB#3 as illustrated in Fig. 1.

As illustrated in Fig. 1, subordinate to the radio base station eNB#1, a cell #11A, a cell #11B, a cell #11C, a cell #12A, a cell #12B, and a cell #12C are located; subordinate to the radio base station eNB#2, a cell #21A, a cell #21B, a cell #21C, a cell #22A, a cell #22B, and a cell #22C are located;, and subordinate to the radio base station eNB#3, a cell #31A, a cell #31B, a cell #31C, a cell #32A, a cell #32B, and a cell #32C are located.

Furthermore, in the cell #11A, the cell #11B, the cell #11C, the cell #21A, the cell #21B, the cell #21C, the cell #31A, the cell #31B, and the cell #31C, a carrier frequency (a carrier) F1 is each used.

In the same manner, in the cell #12A, the cell #12B, the cell #12C, the cell #22A, the cell #22B, the cell #22C, the cell #32A, the cell #32B, and the cell #32C, a carrier frequency (a carrier) F2 is each used.

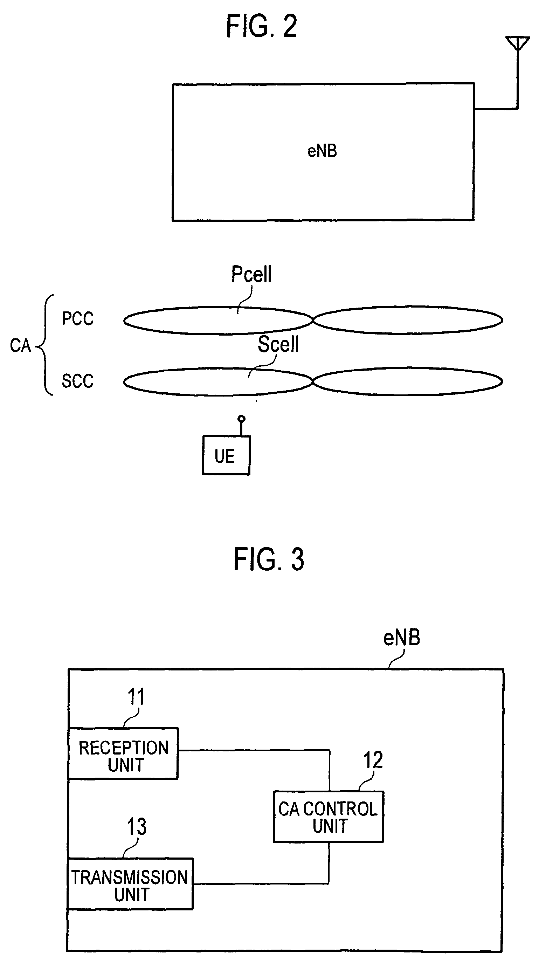

In the mobile communication system, between a user equipment UE and the radio base stations eNB#1 to eNB#3, it is configured to be able to perform CA communication by using a cell formed using a main carrier (PCC) and a cell formed using one or a plurality of sub-carriers (SCCs) having carrier frequencies different from that of the PCC shown in Fig. 2.

Furthermore, in the "PCC" and the "SCC", "P_{cell}" and "S_{cell}" are set as serving cells thereof, respectively.

For example, the user equipment UE, for example, is configured to be able to perform the CA communication by using CC (5 MHz) of a 2 GHz band and the CC (5 MHz) of the 2 GHz band.

In addition, since the functions of the radio base stations eNB#1 to eNB#3 are basically equal to one another, hereinafter the radio base stations eNB#1 to eNB#3 are collectively written as a radio base station eNB unless specifically mentioned.

Furthermore, in the case of performing the CA communication, the user equipment UE is able to use only CC subordinate to one radio base station eNB.

In addition, in the CA communication, the radio base station eNB is configured to designate CC to be used as the PCC and the SCC in each user equipment UE.

Furthermore, the user equipment UE is configured to regularly measure the radio quality of each cell in CC to be measured, which has been designated by a "Measurement Object" included in a "Measurement Configuration" transmitted by the radio base station eNB.

Then, when report conditions (for example, Event A1 to Event A6 defined in 3GPP) designated by a "Reporting Configuration" included in the "Measurement Configuration" transmitted by the radio base station eNB are satisfied, the user equipment UE is configured to transmit a "Measurement Report" including a result (ID of a cell that satisfies the report conditions in the CC to be measured and the radio quality of the cell) of the aforementioned measurement to the radio base station eNB.

As illustrated in Fig. 3, the radio base station eNB includes a reception unit 11, a CA control unit 12, and a transmission unit 13.

The reception unit 11 is configured to receive a signal transmitted by each user equipment UE. For example, the reception unit 11 is configured to receive the aforementioned "Measurement Report" from the user equipment UE.

The CA control unit 12 is configured to determine the "PCC" and the "SCC" to be used in the CA communication in each user equipment UE.

The transmission unit 13 is configured to transmit a signal to each user equipment UE. For example, the transmission unit 13 is configured to transmit, to each user equipment UE, "RRC Reconfiguration" that instructs a change of the "PCC" or the "SCC", which is to be used in the CA communication, addition of the "SCC", or deletion of the "SCC".

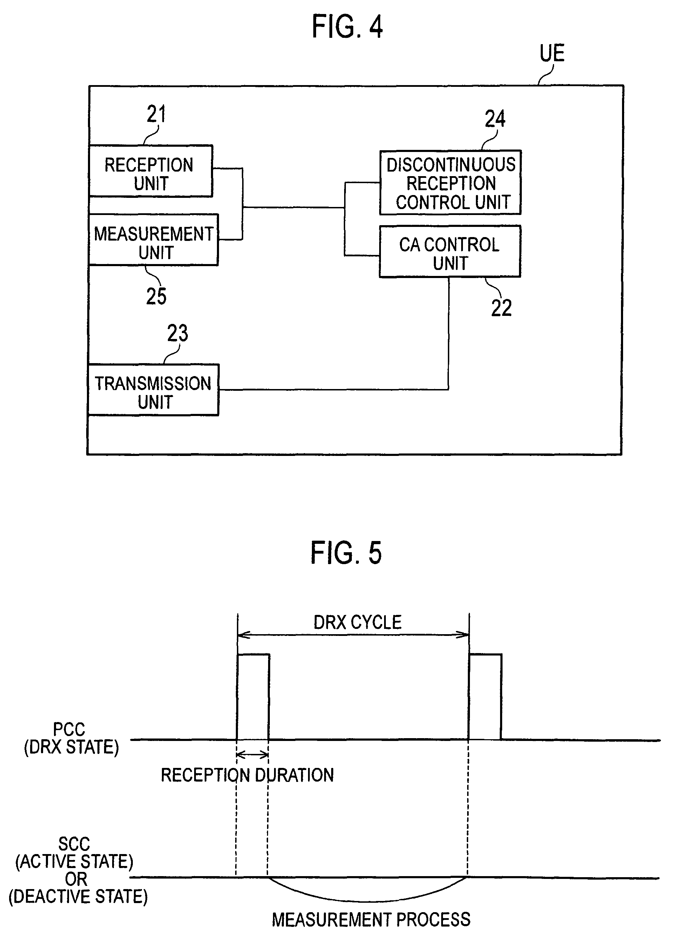

As illustrated in Fig. 4, the user equipment UE includes a reception unit 21, a CA control unit 22, a transmission unit 23, a discontinuous reception control unit 24, and a measurement unit 25.

The reception unit 21 is configured to receive a signal transmitted by the radio base station eNB. For example, the reception unit 21 is configured to receive "Reporting Configuration" included in the aforementioned "Measurement Configuration" from the radio base station eNB.

The CA control unit 22 is configured to manage the "PCC" and the "SCC" to be used in the CA communication in each user equipment UE.

For example, when the discontinuous reception control unit 24 applies DRX control in the PCC, the CA control unit 22 is configured to instruct the measurement unit 25 to perform a measurement process only outside a reception duration that is set in each DRX cycle.

The discontinuous reception control unit 24 is configured to periodically instruct the reception unit 21 and the measurement unit 25, respectively, to perform a reception process and a measurement process of a signal in response to a discontinuous reception state in each user equipment UE.

For example, when the CA control unit 22 determines that carrier aggregation is being performed, that is, in the case of a discontinuous state, the discontinuous reception control unit 24 is configured to instruct the measurement unit 25 to perform measurement only outside the reception duration that is set in each DRX cycle.

The transmission unit 23 is configured to transmit a signal to the radio base station eNB.

For example, the transmission unit 23 is configured to transmit "Measurement Report" to the radio base station eNB.

The measurement unit 25 is configured to perform a "Measurement process (a measurement process)".

For example, when the CA control unit 22 applies CA control, the measurement unit 25 is configured to perform a measurement process in the PCC and the SCC.

Furthermore, when the CA control unit 22 applies the CA control and the discontinuous state control unit 24 applies DRX control in the PCC, the measurement unit 25 is configured to perform a measurement process in the SCC only outside the reception duration that is set in each DRX cycle as illustrated in Fig. 5.

In addition, in such a case, "S_{cell}" in the SCC may be in an "Active state" in which the user equipment UE needs to always monitor PDCCH, or a "Deactive state" in which the user equipment UE needs to receive a downlink signal only when there is a signal addressed to the user equipment UE.

In accordance with the mobile communication system according to the first embodiment of the present invention, in a measurement process in a second carrier (SCC), it is possible to perform a reception process of a downlink signal in a first carrier (PCC) in order to prevent influence of a short break due to switching of a radio circuit, so that it is possible to appropriately measure downlink radio quality when multicarrier transmission (for example, CA communication) is performed.

The characteristics of the present embodiment as described above may be expressed as follows.

A first characteristic of the present embodiment is summarized that a user equipment UE, which performs CA communication (radio communication) with a base station device eNB by using PCC (a first carrier) and SCC (a second carrier) in a mobile communication system, includes: a measurement unit 25 configured to perform a measurement process in the PCC and the SCC, wherein, when DRX control (discontinuous reception control) is applied in the PCC, the measurement unit 25 is configured to perform the measurement process in the SCC only outside a reception duration that is set in each DRX cycle (discontinuous reception cycle).

A second characteristic of the present embodiment is summarized that a user equipment UE, which performs CA communication with a base station device eNB by using PCC and SCC in a mobile communication system, includes: a measurement unit 25 configured to perform a measurement process in the PCC and the SCC, wherein, when DRX control (discontinuous reception control) is applied in the PCC, the measurement unit 25 is configured to perform control of a measurement bandwidth in order to perform the measurement process in the SCC only outside a reception duration that is set in each DRX cycle.

In the first and second characteristics of the present embodiment, the measurement unit 25 may be configured to measure at least one of a reception level, RSRP, and RSRQ of a downlink reference signal in the aforementioned measurement process.

In the first and second characteristics of the present embodiment, the measurement unit 25 may be configured to perform a downlink measurement process for handover in the aforementioned measurement process.

In the first and second characteristics of the present embodiment, the measurement unit 25 may be configured to measure downlink channel quality information in the aforementioned measurement process.

In the first and second characteristics of the present embodiment, the PCC and the SCC may be located in the same frequency band.

A third characteristic of the present embodiment is summarized that a mobile communication method, in which CA communication is performed between a base station device eNB and a user equipment UE by using PCC and SCC in a mobile communication system, includes: a step of performing a measurement process in the PCC and the SCC, wherein, in the step, when DRX control is applied in the PCC, a measurement process is performed in the SCC only outside a reception duration that is set in each DRX cycle.

In addition, the operation of the above-mentioned radio base station eNB or user equipment UE may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the radio base station eNB and the user equipment UE. Furthermore, such a storage medium and processor may be arranged in the radio base station eNB and the user equipment UE as discrete components.

Thus, the present invention has been explained in detail by using the above-described embodiments; however, it is obvious that for persons skilled in the art, the present invention is not limited to the embodiments explained herein. The present invention can be implemented as a corrected and modified mode without departing from the scope of the present invention defined by the claims. Therefore, the description of the specification is intended for explaining the example only and does not impose any limited meaning to the present invention.

### [Industrial Applicability]

As described above, according to the present invention, it is possible to provide a user equipment and a mobile communication method, by which it is possible to appropriately measure downlink radio quality when multicarrier transmission is performed.

### [Reference Signs List]

UE ... User equipment
eNB ... Radio base station
11, 21 ... Reception unit
12, 22 ... CA control unit
13, 23 ... Transmission unit
24 ... discontinuous reception control unit
25 ... Measurement unit

## Claims

1. A user equipment, which is configured to perform radio communication with a base station device by using a first carrier and a second carrier in a mobile communication system, comprising:
a measurement unit (25) configured to perform a measurement process in the first carrier and the second carrier, wherein
when DRX control is applied in the first carrier, the measurement unit (25) is configured to perform the measurement process in the second carrier only outside a reception duration that is set in each DRX cycle,
the radio communication is "Carrier aggregation" communication,
the first carrier is PCC,
the second carrier is SCC, and
the first carrier and the second carrier are located in the same frequency band.

2. A user equipment, which is configured to perform radio communication with a base station device by using a first carrier and a second carrier in a mobile communication system, comprising:
a measurement unit (25) configured to perform a measurement process in the first carrier and the second carrier, wherein
when DRX control is applied in the first carrier, the measurement unit (25) is configured to perform control of a measurement bandwidth in order to perform the measurement process in the second carrier only outside a reception duration that is set in each DRX cycle,
the radio communication is "Carrier aggregation" communication,
the first carrier is PCC,
the second carrier is SCC, and
the first carrier and the second carrier are located in the same frequency band.

3. The user equipment according to claim 1 or 2, wherein the measurement unit (25) is configured to measure at least one of a reception level, RSRP, and RSRQ of a downlink reference signal in the measurement process.

4. The user equipment according to claim 1 or 2, wherein the measurement unit (25) is configured to perform a downlink measurement process for handover in the measurement process.

5. The user equipment according to claim 1 or 2, wherein the measurement unit (25) is configured to measure downlink channel quality information in the measurement process.

6. A mobile communication method, in which radio communication is performed between a base station device and a user equipment by using a first carrier and a second carrier in a mobile communication system, comprising:
a step of performing a measurement process in the first carrier and the second carrier, wherein
in the preceding step, when DRX control is applied in the first carrier, a measurement process is performed in the second carrier only outside a reception duration that is set in each DRX cycle,
the radio communication is "Carrier aggregation" communication,
the first carrier is PCC,
the second carrier is SCC, and
the first carrier and the second carrier are located in the same frequency band.

## Patentansprüche

1. Ein Anwenderendgerät, welches ausgebildet ist zum Ausführen einer Funkkommunikation mit einer Basisstationsvorrichtung durch Verwenden eines ersten Trägers und eines zweiten Trägers in einem Mobilkommunikationssystem, umfassend:
eine Messeinheit (25), ausgebildet zum Ausführen eines Messprozesses in dem ersten Träger und dem zweiten Träger, wobei
wenn eine DRX-Steuerung in dem ersten Träger angewendet wird, die Messeinheit (25) ausgebildet ist zum Ausführen des Messprozesses in dem zweiten Träger nur außerhalb einer Empfangsdauer, welche in jedem DRX-Zyklus eingestellt ist,
die Funkkommunikation eine "Trägeraggregation"-Kommunikation ist,
der erste Träger PCC ist,
der zweite Träger SCC ist, und
der erste Träger und der zweite Träger in demselben Frequenzband positioniert sind.

2. Ein Anwenderendgerät, welches ausgebildet ist zum Ausführen einer Funkkommunikation mit einer
Basisstationsvorrichtung durch Verwenden eines ersten Trägers und eines zweiten Trägers in einem Mobilkommunikationssystem, umfassend:
eine Messeinheit (25), ausgebildet zum Ausführen eines Messprozesses in dem ersten Träger dem zweiten Träger, wobei, wenn eine DRX-Steuerung in dem ersten Träger angewendet wird, die Messeinheit (25) ausgebildet ist zum Ausführen einer Steuerung einer Messbandbreite, um den Messprozess im zweiten Träger nur außerhalb einer Empfangsdauer, welche in jedem DRX-Zyklus eingestellt ist, auszuführen,
die Funkkommunikation eine "Trägeraggregation"-Kommunikation ist,
der erste Träger PCC ist,
der zweite Träger SCC ist und
der erste Träger und der zweite Träger in demselben Frequenzband angeordnet sind.

3. Anwenderendgerät gemäß Anspruch 1 oder 2, wobei die Messeinheit (25) ausgebildet ist zum Messen von zumindest einem Empfangsniveau, RSRP und/oder eines RSRQ eines Downlink-Referenzsignals in dem Messprozess.

4. Anwenderendgerät gemäß Anspruch 1 oder 2, wobei die Messeinheit (25) ausgebildet ist zum Ausführen eines Downlink-Messprozesses zur Übergabe in dem Messprozess.

5. Anwenderendgerät gemäß Anspruch 1 oder 2, wobei die Messeinheit (25) ausgebildet ist zum Messen einer Downlink-Kanalqualitätsinformation in dem Messprozess.

6. Ein Mobilkommunikationsverfahren, wobei eine Funkkommunikation zwischen einer Basisstationsvorrichtung und einem Anwenderendgerät durch verwenden eines ersten Trägers und eines zweiten Trägers in einem Mobilkommunikationssystem ausgeführt wird, umfassend:
einen Schritt zum Ausführen eines Messprozesses in dem ersten Träger und dem zweiten Träger, wobei
in dem vorstehenden Schritt, wenn eine DRX-Steuerung in dem ersten Träger angewendet wird, ein Messprozess in dem zweiten Träger nur außerhalb einer Empfangsdauer, welche in jedem DRX-Zyklus eingestellt ist, ausgeführt wird,
die Funkkommunikation eine "Trägeraggregation"-Kommunikation ist,
der erste Träger PCC ist,
der zweite Träger SCC ist und
der erste Träger und der zweite Träger in demselben Frequenzband positioniert sind.

## Revendications

1. Equipement utilisateur, qui est configuré pour réaliser une communication radio avec un dispositif de station de base en utilisant une première porteuse et une seconde porteuse dans un système de communication mobile, comprenant :
une unité de mesure (25) configurée pour réaliser un procédé de mesure dans la première porteuse et la seconde porteuse, dans lequel
lorsqu'un contrôle de DRX est appliqué dans la première porteuse, l'unité de mesure (25) est configurée pour réaliser le procédé de mesure dans la seconde porteuse seulement en dehors d'une durée de réception qui est réglée dans chaque cycle DRX,
la communication radio est une communication « agrégation de porteuses »,
la première porteuse est PCC,
la seconde porteuse est SCC, et
la première porteuse et la seconde porteuse sont situées dans la même bande de fréquence.

2. Equipement utilisateur, qui est configuré pour réaliser une communication radio avec un dispositif de station de base en utilisant une première porteuse et une seconde porteuse dans un système de communication mobile, comprenant :
une unité de mesure (25) configurée pour réaliser un procédé de mesure dans la première porteuse et la seconde porteuse, dans lequel
lorsqu'un contrôle de DRX est appliqué dans la première porteuse, l'unité de mesure (25) est configurée pour réaliser un contrôle d'une largeur de bande de mesure afin de réaliser le procédé de mesure dans la seconde porteuse seulement en dehors d'une durée de réception qui est réglée dans chaque cycle DRX,
la communication radio est une communication « agrégation de porteuses »,
la première porteuse est PCC,
la seconde porteuse est SCC, et
la première porteuse et la seconde porteuse sont situées dans la même bande de fréquence.

3. Equipement utilisateur selon la revendication 1 ou 2, dans lequel l'unité de mesure (25) est configurée pour mesurer au moins un parmi un niveau de réception, une RSRP, et une RSRQ d'un signal de référence de liaison descendante dans le procédé de mesure.

4. Equipement utilisateur selon la revendication 1 ou 2, dans lequel l'unité de mesure (25) est configurée pour réaliser un procédé de mesure de liaison descendante pour le transfert dans le procédé de mesure.

5. Equipement utilisateur selon la revendication 1 ou 2, dans lequel l'unité de mesure (25) est configurée pour mesurer des informations de qualité de canal de liaison descendante dans le procédé de mesure.

6. Procédé de communication mobile, dans lequel une communication radio est réalisée entre un dispositif de station de base et un équipement utilisateur en utilisant une première porteuse et une seconde porteuse dans un système de communication mobile, comprenant :
une étape de la réalisation d'un procédé de mesure dans la première porteuse et la seconde porteuse, dans lequel
dans l'étape précédente, lorsqu'un contrôle de DRX est appliqué dans la première porteuse, un procédé de mesure est réalisé dans la seconde porteuse seulement en dehors d'une durée de réception qui est réglée dans chaque cycle DRX,
la communication radio est une communication « agrégation de porteuses »,
la première porteuse est PCC,
la seconde porteuse est SCC, et
la première porteuse et la seconde porteuse sont situées dans la même bande de fréquence.
